# FASCICULE DE BREVET EUROPEEN

(11) **EP 2 596 726 B1**
(45) Date de publication et mention de la délivrance du brevet: **11.05.2016**
(21) Numéro de dépôt: 12193220.6
(22) Date de dépôt: 22.12.2011
(51) Int. Cl.: A47J 27/00, A47J 36/02, B41M 5/00

(54) **Article comprenant un revêtement thermostable doté d'un décor au moins bichrome en tons continus et procédé de fabrication d'un tel article**
Artikel, der mit einer thermostabilen Beschichtung mit einem mindestens zweifarbigem Schmuckdekor mit kontinuierlichen Farbtönen ausgestattet ist, und Herstellungsverfahren dieses Artikels
Item comprising a thermostable coating with at least two-colour, continuous-tone decoration and method for manufacturing such an item

(30) Priorité: 23.12.2010 FR 1061218
(43) Date de publication de la demande: 29.05.2013
(62) Demande divisionnaire de: 11815520.9
(73) Titulaire: SEB SA, 69130 Ecully (FR)
(72) Inventeur: Le Bris, Stéphanie, 73000 Chambéry (FR); Muller, Pierre-Jean, 74540 Saint Felix (FR); Perillon, Jean-Luc, 26130 Saint Paul Trois Chateaux (FR)
(74) Mandataire: Novagraaf Technologies

(56) Documents cités:
- WO-A2-2008/142327
- FR-A1- 2 954 074
- JP-A- 5 049 541
- KR-A- 20070 117 247
- US-A- 3 922 458

## Description

La présente invention concerne un article comprenant un revêtement thermostable doté d'un décor au moins bichrome en tons continus et procédé de fabrication d'un tel article. La présente invention concerne également un procédé de fabrication de tels articles, dans lequel le décor est appliqué par impression à jet d'encre.

Plusieurs types de techniques sont connus pour décorer un article culinaire.

Notamment, il est connu de l'homme du métier d'utiliser les techniques de sérigraphie ou de tampographie pour appliquer des motifs sur des surfaces planes afin de les décorer. Ces techniques autorisent une opération de mise en forme de l'article réalisée suite à l'application des motifs par sérigraphie ou tampographie.

Si l'on utilise la sérigraphie (ou la tampographie) pour appliquer des motifs colorés multicolores, plusieurs opérations de sérigraphie (ou la tampographie) doivent alors être effectuées l'une à la suite de l'autre suivant le nombre de couleurs : chaque couleur nécessite une passe de sérigraphie (ou de tampographie), étant entendu que chaque impression doit être suivie d'une opération de séchage avant impression de la couche d'encre suivante. Une telle technique d'impression n'est rentable que lorsque l'on applique la même image ou le motif sur un grand nombre de supports. Pour l'impression d'un petit nombre de pièces, une sérigraphie (ou tampographie) en plusieurs couleurs est très coûteuse et n'est absolument pas rentable dans la mesure où un écran (ou une empreinte gravée) séparé est nécessaire pour chaque couleur de base. En outre, le coût de la confection et du nettoyage de l'écran de sérigraphie est élevé, le temps de réalisation de l'écran est long ce qui nécessite une planification sans faille des fabrications. Par ailleurs le changement de teinte même s'il est réalisé dans un graphisme identique nécessite un nettoyage soigné qui réduit le temps de production. (Idem pour l'empreinte gravée). En outre, les techniques de sérigraphie et de tampographie génèrent des stocks importants de produits et de composants intermédiaires (notamment les encres, les écrans, les calottes semi-finies, etc.).

Il est également connu d'utiliser la technique d'impression par sublimation pour obtenir un article culinaire décoré. De façon générale, la sublimation est la transformation d'un corps solide en gaz ou en vapeur, sans passage par l'état liquide. Selon la technique d'impression par sublimation, le motif initialement imprimé sur un support (papier ou film plastique) est plaqué sous pression sur la surface de l'article à décorer, puis l'ensemble est brièvement porté à une température comprise entre 150°C et 210°C. L'impression par sublimation traditionnelle n'est employée que sur des articles de forme plate, car la pression du support sur un article de forme non plate mène à son plissement et conséquemment à des défauts d'impression. Cependant, il est connu, de par les documents référencés EP 0451067 et EP 544 603, des perfectionnements du procédé d'impression par sublimation qui permettent la décoration de toutes les faces d'un article de forme quelconque. Cependant, de tels perfectionnements rendent les procédés d'impression par sublimation très complexes à mettre en oeuvre et peu productifs.

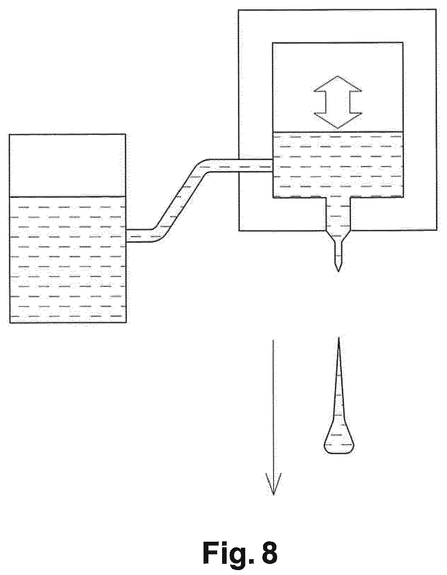

Par ailleurs, et comme illustré sur la figure 8, il est connu d'utiliser une technique d'impression dite à jet d'encre qui consiste à projeter des gouttelettes d'encre depuis une petite ouverture jusqu'à des positions parfaitement déterminées sur un support, de manière à créer une image. L'impression à jet d'encre est la seule technique d'impression sans contact. On distingue deux types de techniques d'impression à jet d'encre : la première est dite à « jet d'encre continu dévié » (désignée en anglais par les termes « *Continuous Ink Jet »* correspondant à l'abréviation CIJ) et la seconde est appelée « goutte à la demande» (désignée en anglais par l'expression *«Drop On Demand»* correspondant à l'abréviation DOD) .

La technique d'impression à jet d'encre présente intrinsèquement des avantages qui, parallèlement au développement des outils informatiques et à un accroissement de la qualité et des vitesses d'impression, expliquent son succès. D'une part, l'absence de forme imprimante (écran, empreinte gravée) élimine les travaux de préparation nécessaires à la mise en oeuvre d'autres techniques d'impression, notamment la préparation des écrans, la gravure des empreintes ou, le cas échéant, des supports (papier ou film plastique). D'autre part, la gestion dynamique des données d'impression, qui varient plus particulièrement à chaque page à imprimer, autorise la personnalisation de documents et permet le tirage de très petites séries, sans induire un coût prohibitif.

Outre les travaux de bureau et la personnalisation des documents, les applications de l'impression à jet d'encre sont multiples : affiches en grand et très grand format, impression sur textiles, décoration de céramique, marquage, adressage, impression sur aliments, dépôt de principes actifs, dépôt de biomatériaux, impressions d'encres conductrices, etc.

Parmi les applications de la technique d'impression à jet d'encre, une application concerne la décoration d'articles dont le procédé de fabrication nécessite une cuisson à haute température. Ces articles sont plus particulièrement des carreaux en céramique. Dans le domaine de la fabrication d'articles en céramique, les techniques de fabrication, par exemple le frittage ou la fusion de poudres, prévoient de porter les articles à des températures d'au moins 300°C et pouvant aller jusqu'à 1300°C et au-delà. De ce fait, il n'est pas possible pour imprimer des décors selon la technique du jet d'encre d'utiliser des encres classiques telles qu'utilisées dans l'impression papier ou textile. Des encres spéciales, mais aussi des têtes d'injection et des logiciels adaptés, ont été développées. Nous citerons, par exemple, les encres QuickPaint® et l'imprimante KERAJET selon leur appellation commerciale respective.

Dans le domaine des articles culinaires présentant un décor imprimé par jet d'encre, le document JP05049541 enseigne un matériau stratifié comprenant un substrat, une première couche pour assurer l'adhésion avec le substrat, une couche d'impression déposée sur la première couche et une couche supérieure consistant en une fluororésine déposée sur la couche d'impression. Ce matériau répond au problème de la gravure localisée, par exemple le litrage, pour lequel les solutions préexistantes étaient basées sur une gravure mécanique (reliefs) qui fragilisait le revêtement (usure rapide). Par ailleurs, le décor du matériau de JP 05049541 est monochrome et composé de la combinaison de points ayant une surface de 2 mm² environ. Rien n'est dit dans JP 05049541 concernant un décor comportant plusieurs couleurs.

Il est encore connu par la demande de brevet coréen KR2007/0117247 une méthode d'impression à jet d'encre de motifs sur la surface d'un article culinaire préalablement recouvert d'une sous-couche opaque blanche, sur laquelle est déposée une couche organique transparente réceptrice de l'encre, faisant intervenir un diluant et un durcisseur de nature organique pour permettre une bonne adhésion de l'encre projetée. Après l'impression des motifs sur la couche réceptrice, une couche de revêtement protection est appliquée sur les motifs imprimés, puis est ensuite soumise à une cuisson à une température inférieure à 300°C.

Or, pour obtenir des revêtements d'articles chauffants présentant des propriétés fonctionnelles satisfaisantes, (notamment en termes d'anti-adhérence pour des revêtements à base de PTFE ou de brillance et dureté pour des revêtements émaillés), la composition de la couche de revêtement de protection nécessite en vue de sa solidification une température de cuisson supérieure à 300°C. En effet, une telle température est nécessaire pour obtenir un revêtement fritté à base de résine fluorocarbonée (par exemple le PTFE) ou vitrifié (dans le cas d'un revêtement émaillé).

Cependant, avec de telles conditions de mise en oeuvre, il n'est pas envisageable de réaliser un revêtement comprenant une couche organique réceptrice de l'encre, une couche de décor obtenue par impression jet d'encre et une couche de revêtement de protection fritté à base de résine fluorocarbonée ou vitrifié (dans le cas d'un émail). En effet, au cours de la cuisson (à une température supérieure à 300°C), les composants organiques de la couche réceptrice se dégradent et sont piégés par la couche de finition, ce qui provoque un brunissement du revêtement et masque les motifs.

Pour résoudre ce problème, la demanderesse a découvert qu'il était possible de se passer de couche réceptrice de l'encre en déposant par impression à jet d'encre une composition de décor directement sur une face opaque d'un support (par exemple d'une calotte métallique d'article culinaire).

Par face opaque, on entend, au sens de la présente invention, une face qui est intrinsèquement opaque par la nature du matériau constitutif du support, ou qui est rendue opaque par recouvrement par une sous-couche continue opaque.

A titre d'exemples de matériaux intrinsèquement opaques, on entend, au sens de la présente invention l'aluminium ou les alliages d'aluminium, le magnésium ou les alliages de magnésium, les aciers inoxydables, les fontes de fer, le cuivre, le titane et plus généralement les métaux et alliages métalliques, les céramiques (porcelaine, faïence et plus généralement la poterie culinaire), ou les matériaux composites comportant une pluralité de couches d'un ou plusieurs des matériaux précédents (en l'occurrence les colaminés métalliques).

Par sous-couche opaque, on entend au sens de la présente invention, une couche de matériau comportant une substance chimique optiquement non transparente, par exemple une substance choisie parmi les pigments thermostables ou thermochromes, les paillettes colorées ou métalliques, les charges opacifiantes, et leurs mélanges.

La sous-couche opaque est de préférence pigmentée, et mieux de couleur noire ou blanche, et encore mieux blanche.

L'adhérence du décor « jet d'encre » ainsi formé » sur le support est assurée :
- soit par absorption superficielle grâce à la porosité du support lui-même ou de la sous-couche le cas échéant,
- soit grâce à la composition de l'encre du décor jet d'encre qui comprend un liant.

Plus particulièrement, la présente invention a pour objet un article chauffant comme défini dans la revendication 1, comprenant un substrat présentant deux faces opposées, dont l'une au moins est opaque, et un revêtement thermostable disposé sur ladite face opaque.

Selon l'invention, le revêtement thermostable comprend un décor au moins bichrome en tons continus se présentant sous forme d'une couche continue ou discontinue, et l'article chauffant a été soumis à une cuisson à une température supérieure à 300 °C.

Par décor en tons continus, on entend, au sens de la présente invention, un décor qui peut comporter toutes les nuances entre les tons les plus clairs et les plus foncés, sans laisser paraître de points, ce qui est différent d'un décor en ton direct ou par aplat conduisant à un contraste élevé, tel que par exemple le décor décrit dans la demande internationale WO°2008/142327 appartenant à la présente demanderesse.

Par article chauffant, on entend, au sens de la présente invention, un article qui possède son propre système de chauffage, ou qui est chauffé par un système extérieur et qui est apte à transmettre l'énergie calorifique apportée par ce système à un matériau ou objet tiers au contact dudit article.

Si le substrat n'est pas intrinsèquement opaque, il est indispensable de recouvrir préalablement la face à décorer par une sous-couche opaque, sur laquelle on imprime le décor. Une sous-couche appropriée est telle que décrite précédemment et présente les propriétés susmentionnées.

Selon un premier mode de réalisation de l'article chauffant selon l'invention, le décor est exempt de liant. Dans ce cas, l'adhérence du décor sur le support est assurée par la porosité du support ou de la sous-couche, le cas échéant par absorption superficielle du décor. Avantageusement, le support ou la sous-couche que l'on recouvre par le décor exempt de liant n'est pas lisse et présente une rugosité superficielle Ra inférieure ou égale à 10 µm.

Selon un deuxième mode de réalisation de l'article chauffant selon l'invention, le décor comprend au moins un liant thermostable compatible avec le substrat et/ou, le cas échéant avec la sous-couche. Dans ce cas, l'adhérence du décor sur le support est assurée par le liant de la composition de décor. Il n'est alors pas nécessaire que le support soit poreux.

Par liant thermostable, on entend, au sens de la présente invention, un liant thermostable à au moins 300°C.

A titre de liant thermostable utilisable dans la couche de décor selon l'invention, on peut notamment citer les émaux, les résines fluorocarbonées (seules ou en mélange), les polymères inorganiques ou hybrides organiques-inorganiques synthétisés par voie sol-gel, les silicones, les silicone-polyesters, les polyimides, le polysulfure de phényle (PPS), le polysulfure d'éthylène (PES), les polyétheréthercétones (PEEK), les polyéthercétones (PEK), les polyamide-imides (PAI),les silicones, les fluorosilicones, les polybenzimidazoles (PBI), étant entendu que ces matériaux doivent être finement dispersables ou solubilisables dans la composition de décor.

Le revêtement thermostable selon l'invention peut en outre comprendre une couche de finition continue. Celle-ci peut être déposée sur le décor, et elle est nécessairement transparente de manière à ne pas masquer le décor.

Par revêtement transparent (qu'il s'agisse notamment du revêtement sol-gel ou de la couche de finition), on entend, au sens de la présente demande, un revêtement laissant apparaitre tout ou partie du décor.

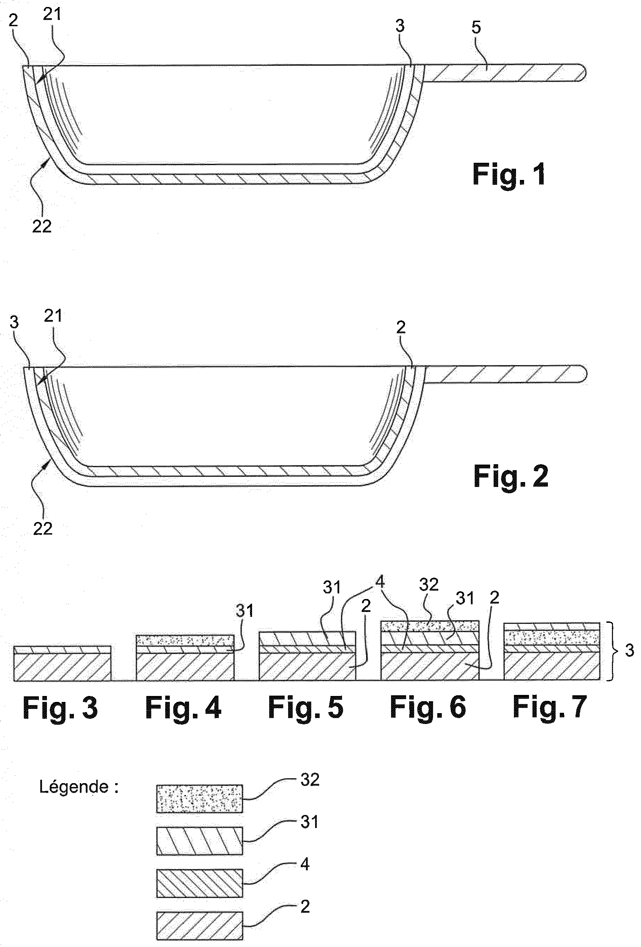

Cette couche de finition peut aussi être disposée entre le support ou la sous-couche (le cas échéant) et le décor. Dans ce dernier cas, il n'est pas nécessaire que la couche de finition soit transparente puisque le décor recouvre la couche de finition, comme illustré par la figure 7 ci-après.

Si le décor comporte un liant thermostable, ce dernier devra être non seulement compatible avec le substrat et/ou, le cas échéant avec la sous-couche, mais aussi avec la couche de finition.

Le décor du revêtement thermostable selon l'invention est un décor bichrome, c'est-à-dire qu'il comporte au moins deux composés colorants différents. Ceux-ci peuvent être choisis parmi les pigments thermostables, les sels métalliques, les pigments semi-conducteurs thermochromes, les pigments conducteurs, les pigments magnétiques et leurs mélanges.

Le décor selon l'invention est avantageusement un décor hyperréaliste qui reproduit très précisément le décor préalablement choisi que l'on souhaite imprimer. Selon un mode particulièrement avantageux de la présente invention, le décor selon l'invention est au moins quadrichrome, et de préférence hexachrome.

On peut envisager différents types d'articles conformes à l'invention, de différentes formes et réalisés dans différents matériaux.

Ainsi, le support peut être en un matériau choisi parmi les métaux, le verre, les céramiques et les matières plastiques.

A titre de supports métalliques utilisables dans le procédé selon l'invention, on peut avantageusement citer les supports en aluminium ou en alliage d'aluminium anodisé ou non, ou en aluminium poli, brossé ou microbillé, sablé, traité chimiquement ou en acier inoxydable poli, brossé ou microbillé, ou en fonte de fer ou d'aluminium, en titane ou en cuivre martelé ou poli.

L'article chauffant selon l'invention peut notamment être un article culinaire, et en particulier un article culinaire dont une des faces opposées est une face intérieure concave destinée à être disposée du côté d'aliments susceptibles d'être introduits dans ledit article, et une seconde desdites faces opposées est une face extérieure convexe destinée à être disposée vers une source de chaleur.

A titre d'exemples non limitatifs d'articles culinaires conformes à la présente invention, on citera notamment des articles culinaires tels que les casseroles et les poêles, les woks et les sauteuses, les faits-touts et les marmites les crêpières, les grills, les moules et plaques pour la pâtisserie, les plaques et grilles de barbecue, les bols de préparation.

On peut également envisager d'autres types de supports qui ne sont pas limités au seul domaine culinaire. Ainsi, on peut également envisager à titre d'articles conformes à l'invention des articles électroménagers tels que des fers à repasser, des fers à friser, des lisseurs à cheveux etc., des pots isothermes (pour cafetières par exemple) ou des bols mixeurs.

Dans le cas où l'article chauffant selon l'invention est un article culinaire tel que décrit ci-dessus, le décor se présente avantageusement sous forme d'une couche continue ou discontinue, qui peut être disposée soit sur la face intérieure de l'article, soit sur sa face extérieure. Comme indiqué précédemment, le décor peut soit être exempt de liant, soit comporter un liant thermostable.

Si le décor est disposé sur la face intérieure de l'article culinaire, le liant thermostable sera de préférence choisi parmi les résines fluorocarbonées, les polymères inorganiques ou hybrides organiques-inorganiques synthétisés par voie sol-gel, le polysulfure de phényle (PPS), le polysulfure d'éthylène (PES), les polyétheréthercétones (PEEK), les polyéthercétones (PEK), les polyamide-imides (PAI), les polybenzimidazoles (PBI).

Si le décor est disposé sur la face extérieure de l'article culinaire, le liant thermostable sera de préférence choisi parmi les émaux, les résines fluorocarbonées (seules ou en mélange), les polymères inorganiques ou hybrides organiques-inorganiques synthétisés par voie sol-gel, les silicones, les silicone-polyesters, les polyimides, le polysulfure de phényle (PPS), le polysulfure d'éthylène (PES), les polyétheréthercétones (PEEK), les polyéthercétones (PEK), les polyamide-imides (PAI),les silicones, les fluorosilicones, les polybenzimidazoles (PBI).

A titre d'exemples non limitatifs d'articles culinaires conformes à la présente invention, on citera notamment des articles culinaires tels que les casseroles et les poêles, les woks et les sauteuses, les crêpières, les grills, les moules et plaques pour la pâtisserie, les plaques et grilles de barbecue.

La présente invention a aussi pour objet un procédé de fabrication d'un article chauffant comme défini dans la revendication 9, comprenant les étapes suivantes :
a) fourniture d'un substrat comprenant deux faces opposées, dont l'une au moins est opaque ou rendue opaque ; puis
b) réalisation d'un revêtement thermostable sur ladite face opaque, qui comprend les étapes suivantes :
   - b1) une étape d'application sur ladite face opaque d'une composition de décor, pour former une couche de décor humide recouvrant au moins partiellement ladite face opaque; puis
   - b2) un traitement thermique de solidification de ladite couche humide de décor, pour former un décor se présentant sous forme d'une couche continue ou discontinue recouvrant au moins partiellement ladite face opaque.

Selon l'invention, la composition de la couche de décor comprend au moins deux composés colorants différents et est appliquée par impression à jet d'encre, et le traitement thermique de solidification de la couche humide de décor est réalisé à une température supérieure à 300°C.

Le substrat, la couche de décor et les composés colorants qu'elle contient sont tels que définis précédemment.

Si le substrat n'est pas intrinsèquement opaque, il est indispensable de recouvrir préalablement la face à décorer par une sous-couche opaque, sur laquelle on imprime le décor. Une telle sous-couche est telle que décrite précédemment et présente les propriétés susmentionnées.

La surface opaque du substrat (intrinsèquement opaque ou rendue opaque) peut faire l'objet d'une étape de préparation comme par exemple un dégraissage, un sablage, un grenaillage, un brossage, un émerisage, un satinage, une attaque chimique, une anodisation.

Le procédé selon l'invention peut en outre comporter une étape de réalisation d'une couche de finition. Cette étape peut être réalisée par application d'une composition de finition continue et transparente (pour les mêmes raisons que celles évoquées précédemment) sur la couche de décor humide obtenue à l'issue de l'étape b1), préalablement au traitement thermique b2) de solidification. L'étape de réalisation de la couche de finition peut aussi être réalisée par application d'une composition de finition couche continue (pas nécessairement transparente), préalablement à la réalisation b1) de la couche de décor (31).

Comme indiqué précédemment, la composition de décor peut ou non comporter un liant thermostable : en fonction de la porosité du substrat ou de la sous-couche sous-jacente, la présence de ce liant thermostable sera ou non indispensable (il est indispensable dans le cas d'un substrat lisse). La nature du liant thermostable est telle qu'indiquée précédemment.

D'autres avantages et particularités de la présente invention résulteront de la description qui va suivre, donnée à titre d'exemple non limitatif et faite en référence aux figures annexée :
- la figure 1 représente une vue schématique en coupe d'un article culinaire conforme à l'invention selon un premier mode de réalisation,
- la figure 2 représente une vue schématique en coupe d'un support d'article culinaire conforme à l'invention selon un deuxième mode de réalisation,
- les figures 3 à 7 représentent des vues schématiques en coupe d'une portion du fond d'un article culinaire comprenant un revêtement thermostable selon l'invention, selon différentes variantes de réalisation,
- la figure 8 représente une vue schématique en coupe d'un dispositif industriel de décoration par jet d'encre.

Les éléments identiques représentés sur les figures 1 à 7 sont identifiés par des références numériques identiques.

Sur les figures 1 et 2, on a représenté, à titre d'exemple d'article culinaire selon l'invention, une poêle 1 comprenant un support 2 se présentant sous forme de calotte creuse avec un fond 24 et une paroi latérale 25 s'élevant à partir du fond 24, et une poignée de préhension 5. Le support 2 comprend une face intérieure 21 concave pouvant recevoir des aliments, et une face extérieure 22 convexe destinée à être disposée du côté de la source de chaleur, telle qu'une plaque de cuisson ou un brûleur.

Sur la figure 1, la face intérieure 21 du support 2 est recouverte par un revêtement thermostable 3 selon l'invention. Par contre, sur la figure 2, c'est la face extérieure 22 du support 2 qui est recouverte par un revêtement thermostable 3 selon l'invention.

Les différentes variantes de réalisation du revêtement thermostable 3 selon l'invention représenté sur les figures 1 et 2 sont illustrées de manière détaillée par les figures 3 à 7. Elles correspondent à des vues de dessus du fond 24 de l'article chauffant 1 représenté sur la figure 1 (revêtement thermostable 3 avec décor 31 sur la face intérieure 21), ou à des vues de dessous du fond de l'article représenté sur la figure 2 (revêtement thermostable 3 avec décor 31 sur la face extérieure 22) :
- sur la figure 3, le revêtement 3 thermostable est uniquement constitué du décor 31 (portion continue sur la figure 3), qui est disposé directement sur le support 2, c'est-à-dire :
   o soit directement sur la face intérieure 21 dans le cas du mode de réalisation illustré sur la figure 1 ; dans ce cas, la figure 3 est une vue de dessus du fond de l'article 1,
   o soit directement sur la face extérieure 22 dans le cas du mode de réalisation illustré sur la figure 2 ; dans ce cas, la figure 3 est une vue de dessous du fond de l'article 1 ;
- la figure 4 se différencie de la figure 3 par la présence d'une couche de finition 32 continue et transparente disposée sur le décor 31 ;
- la figure 5 se différencie de la figure 3 par la présence d'une sous-couche opaque 4, entre le décor 31 et le support 2, c'est-à-dire la face intérieure 21 pour le mode de réalisation illustré sur la figure 1 (vue de dessus) ou la face extérieure 22 pour le mode de réalisation illustré sur la figure 2 (vue de dessous),
- la figure 6 se différencie de la figure 5 par la présence d'une couche de finition 32 continue et transparente disposée sur le décor 31 sur la figure 6,
- la figure 7 se différencie de la figure 5 par la présence d'une couche de finition 32 continue disposée entre la sous-couche 4 et le décor (31).

Les compositions des couches de décor 31 et de finition, ainsi que le liant thermostable de ces couches (le cas échéant) sont tels que décrits précédemment.

Sur la figure 8, est représentée une vue schématique en coupe d'un dispositif industriel de décoration par jet d'encre fonctionnant selon la technologie de « goutte à la demande » (désignée en anglais par l'expression « *Drop on Demand* » et l'abréviation correspondante DOD). Le fonctionnement de ce dispositif est celui décrit dans la demande internationale WO 2006/126189. Il consiste en un procédé de type DOD piézo-électrique, pour lequel les gouttes nécessaires à l'impression sont créées par la déformation de la paroi du réservoir d'encre, suite à une excitation électrique d'un cristal piézo-électrique.

L'invention est illustrée plus en détail dans les exemples suivants.

Dans ces exemples, sauf indication contraire, tous les pourcentages et parties sont exprimés en poids.

### EXEMPLES

### Dispositif de décoration par jet d'encre fonctionnant (DOD)

On utilise comme dispositif d'impression une imprimante commercialisée KERAJET, par exemple à l'aide de l'imprimante de référence commerciale 700X, habituellement destinée à l'impression de carreaux céramiques.

### Produits

### Supports:

Disques en aluminium de 31 cm de diamètre et d'épaisseur 2.4 mm.

### Encres:

### Encres pour impression jet d'encre sur des revêtements thermostables de type céramique (émail ou sol-gel)

- encres de couleur bleue commercialisées par la société FERRO CORPORATION sous les dénominations commerciales QuickPaint inks ou KeramInks,
- encres de couleur orange commercialisées par la société FERRO sous les dénominations commerciales QuickPaint inks ou KeramInks,
- encres de couleur marron commercialisées par la société FERRO sous les dénominations commerciales QuickPaint inks ou KeramInks,
- encres de couleur jaune commercialisées par la société FERRO sous les dénominations commerciales QuickPaint inks ou KeramInks,
- encres de couleur rose commercialisées par la société FERRO sous les dénominations commerciales QuickPaint inks ou KeramInks,
- encres de couleur noire commercialisées par la société FERRO sous les dénominations commerciales QuickPaint inks ou KeramInks.

### Encres aqueuses pigmentées pour impression jet d'encre sur des revêtements thermostables non émaillés

Il s'agit de formulations aqueuses adaptées à une impression par jet d'encre telle que connue par l'homme du métier. Ces formulations contiennent des pigments inorganiques permettant une bonne tenue en température des couleurs, de l'eau comme véhiculant principal avec au moins un co-solvant et au moins un dispersant pour permettre une bonne stabilité des pigments en suspension.

Le choix des pigments pourra se faire comme suit :
- Pour une encre bleue, on pendra par exemple un bleu de cobalt (Color Index PB28),
- pour le rouge, un oxyde de fer rouge (Color Index PR101),
- pour le jaune un oxyde de fer jaune (Color Index PY42), et
- pour le noir un noir de carbone (Color Index PBk7). Ces encres sont préparées comme suit :

### 1/ Préparation d'une pâte pigmentaire

On prépare dans un premier temps une pâte pigmentaire correspondant à chaque couleur. Il s'agit d'une dispersion comprenant entre 10 et 70% de pigment, 30 à 90% d'eau et 0,1 à 10% d'un dispersant (par exemple le Disperbyk 192). Cette dispersion est préparée dans un broyeur (par exemple le broyeur à billes de type LMZ commercialisé par la société Netzsch GmbH) permettant de réduire la granulométrie des pigments de façon à ce que toutes les particules soient de taille inférieure à 500 nanomètres, ou que cette taille maximale puisse être atteinte facilement par une étape de filtration, pour ne pas risquer de boucher les buses de la tête d'impression.

### 2/ Préparation de l'encre aqueuse

Une formule standard éjectable par jet d'encre peut être composée telle que suit :
- 2 à 50% de pâte pigmentaire
- 20 à 70% d'eau
- 10 à 80% de solvants permettant d'ajuster la viscosité et la tension de surface de la formule : par exemple un mélange glycérol/éthylène glycol avec un ratio compris entre 1 et 5. La viscosité de l'encre finale devra être comprise entre 5 et 20 cP à sa température d'utilisation (température dans la tête d'impression, par exemple comprise entre la température ambiante et 40°C) et sa tension superficielle sera comprise entre 22 et 40 mN/m.

### Revêtement thermostable en émail

On prépare une première barbotine de fritte d'émail B1 blanche à partir d'une fritte d'émail blanc F1, dont la composition est donnée dans le tableau 1 ci-dessous :

**Tableau 1 : Formule de la fritte pour émail blanc F1**

| Oxyde de | Parties en poids | variation |
|---|---|---|
| Na | 24.57 | 20-35 |
| Si | 40.67 | 32-48 |
| K | 18.33 | 13-23 |
| V | 7.60 | 0-12 |
| Sb | 4.38 | 0-8 |
| Ba | 4.45 | 0-6 |
| Total | 100 | 20-35 |

La composition de la barbotine B1 est donnée ci-dessous :

| | |
|---|---|
| • Fritte F1 | : 100 parties en poids, |
| • Acide borique | : 3 parties en poids, |
| • Potasse | : 1.5 parties en poids, |
| • Dioxyde de titane | : 20 parties en poids, |
| • Eau | : 55 parties en poids. |

On prépare une deuxième barbotine de fritte d'émail de finition B2 à partir d'une fritte d'émail de finition F2, dont la composition est donnée dans le tableau 2 ci-dessous :

**Tableau 2 : Formule de la fritte pour émail de finition F2**

| Oxyde de | Parties en poids | variation |
|---|---|---|
| Na | 21.01 | 15-30 |
| Si | 35.86 | 20-45 |
| K | 16.49 | 10-20 |
| Ti | 21.17 | 15-25 |
| V | 5.47 | 0-10 |
| Total | 100 | |

La composition de la barbotine B2 est donnée ci-dessous :

| | |
|---|---|
| • Fritte F2 | : 100 parties en poids, |
| • Acide borique | : 3 parties en poids, |
| • Potasse | : 1 partie en poids, |
| • Eau | : 52 parties en poids. |

### Revêtement thermostable fluorocarboné à base de PTFE

On prépare une première pâte sérigraphique blanche PS1 à base de polytétrafluoroéthylène dont la composition est donnée ci-dessous :
- dispersion PTFE à 60% d'extrait sec et de taille de particules moyenne de 220 nm : 50%
- eau : 10%
- pâte pigmentaire TiO₂ 20% [pigment TiO2/eau 50 :50]
- propylène glycol : 15%
- épaississant acrylique tel que ceux commercialisés par PolymerLatex GmbH : 3%
- ammoniaque : 2%

On prépare une deuxième pâte sérigraphique incolore PS2 à base de polytétrafluoroéthylène dont la composition est donnée ci-dessous :
- dispersion PTFE à 60% d'extrait sec et de taille de particules de 220nm: 80%
- eau : 2%
- propylène glycol : 15%
- épaississant acrylique tel que ceux commercialisés par PolymerLatex GmbH : 3%
- ammoniaque : 1%

### Revêtement thermostable sol-gel

On prépare une composition sol-gel SG1 à partir d'un mélange de TEOS (tétraéthoxysilane) et de MTMS (méthyltriméthoxysilane) en milieu alcalin contenant du dioxyde de titane à titre de pigment blanc. Une composition est donnée ci-dessous :
▪ 20% à 40% en poids de tétraéthoxysilane (TEOS);
▪ 40% à 50% en poids de méthyltriméthoxysilane (MTMS);
▪ 2 1 à 4 1 de sol de silice, avec une teneur en SiO₂ entre 10% et 40% ;
▪ 0% à 40% en poids de particules de SiO₂ micronisées;
▪ 0% à 5% en poids de triméthoxyde de bore (TMB);
▪ 0% à 5% en poids de sodium d'éthoxyde;
▪ 0% à 5% en poids de potassium d'éthoxyde;
▪ 0% à 5% en poids de formate de sodium;
▪ 0% à 5% en poids de formate de potassium;
▪ 0% à 5% en poids d'acetylacétonate d'aluminium;
▪ 20% to 50% en poids d'éthanol, de propanol, de butylglycol, ou d'hexylèneglycol;
▪ 0% à 10% en poids d'hydroxyde de sodium;
▪ 0% à 5% en poids d'agents stabilisateurs, modificateurs de surface, additifs rhéologiques;
▪ 6 à 12% % en poids de TiO₂ à titre de pigment.

Les pourcentages massiques indiqués le sont par rapport au poids total de la composition sol-gel.

### EXEMPLE 1

**Article culinaire en aluminium avec un revêtement extérieur en émail sur lequel est imprimé un décor hyperréaliste en tons continus au niveau du fond.**

A partir d'un disque en aluminium, une presse permet d'obtenir une calotte 2 en forme de poêle (fond plat avec jupe tel qu'illustré sur les figures 1 et 2).

Cette calotte 2 est préalablement dégraissée en voie alcaline

On applique par pulvérisation la barbotine aqueuse B1 sur la totalité de la face extérieure pour obtenir une couche d'émail blanche non cuite 3. Une étape de séchage permet d'obtenir le biscuit 3 d'émail.

On imprime par jet d'encre, à l'aide du dispositif illustré sur la figure 8, un décor 31 hyperréaliste sur le fond 24 de la calotte 2 recouverte de biscuit 3. L'imprimante de marque KERAJET® permet de reproduire le décor de manière hyperréaliste par hexachromie à partir de six encres de couleurs différentes pour revêtements thermostables de type céramique telles que décrites précédemment, de préférence de marque homogène.

La calotte 2 ainsi revêtue d'émail 3 et pourvue du décor 31 hyperréaliste est ensuite soumise à un traitement thermique de cuisson à une température de 560°C pendant 15 minutes, à l'issue duquel on obtient un revêtement en émail avec une reproduction très fidèle du décor choisi sur toute la partie plane de l'article (fond), ce décor se floutant sur la jupe.

La totalité du revêtement 3 ainsi formé garde toutes les caractéristiques d'un revêtement émaillé une : brillance, dureté, résistance aux chocs, résistance à la flamme, résistance à la corrosion des détergents utilisés dans les lave-vaisselles.

La configuration du revêtement 3 ainsi obtenu correspond à celle de la figure 5.

### EXEMPLE 2

**Article culinaire en aluminium avec un revêtement extérieur en émail sur lequel est imprimé un décor hyperréaliste en tons continus au niveau du fond.**

A partir d'un disque en aluminium, une presse permet d'obtenir une calotte 2 en forme de poêle (fond plat avec jupe tel qu'illustré sur les figures 1 et 2).

Cette calotte 2 est préalablement dégraissée en voie alcaline

On applique par pulvérisation la barbotine aqueuse B1 sur la totalité de la face extérieure pour obtenir une couche d'émail blanche non cuite 3. On applique par pulvérisation la barbotine de finition B2. Une étape de séchage permet d'obtenir le biscuit 3 d'émail.

On imprime par jet d'encre, à l'aide du dispositif illustré sur la figure 8, un décor 31 hyperréaliste sur le fond 24 de la calotte 2 recouverte de biscuit 3. L'imprimante de marque KERAJET® permet de reproduire le décor de manière hyperréaliste par hexachromie à partir de six encres de couleurs différentes pour revêtements thermostables de type céramique telles que décrites précédemment, de préférence de marque homogène.

La calotte 2 ainsi revêtue d'émail 3 et pourvue du décor 31 hyperréaliste est ensuite soumise à un traitement thermique de cuisson à une température de 560°C pendant 15 minutes, à l'issue duquel on obtient un revêtement en émail avec une reproduction très fidèle du décor choisi sur toute la partie plane de l'article (fond), ce décor se floutant sur la jupe.

La totalité du revêtement 3 ainsi formé garde toutes les caractéristiques d'un revêtement émaillé uni : brillance, dureté, résistance aux chocs, résistance à la flamme, résistance à la corrosion des détergents utilisés dans les lave-vaisselles.

La configuration du revêtement 3 ainsi obtenu correspond à celle de la figure 7.

### EXEMPLE 3

**Article culinaire en aluminium avec un revêtement extérieur en émail sur lequel est imprimé un décor hyperréaliste** en **tons continus** au **niveau du fond.**

A partir d'un disque en aluminium, une presse permet d'obtenir une calotte 2 en forme de poêle (fond plat avec jupe tel qu'illustré sur les figures 1 et 2).

Cette calotte 2 est préalablement dégraissée en voie alcaline, puis satinée pour donner une surface de coloration blanche homogène.

On applique ensuite par pulvérisation la barbotine aqueuse B2 sur la totalité de la face extérieure, pour obtenir une couche d'émail non cuite 3. Une étape de séchage permet d'obtenir le biscuit 3 d'émail.

Puis, on imprime par jet d'encre, à l'aide du dispositif illustré sur la figure 8, un décor 31 hyperréaliste sur le fond 24 de la calotte 2 recouverte de biscuit 3. L'imprimante de marque KERAJET® permet de reproduire le décor de manière hyperréaliste par hexachromie à partir de six encres de couleurs différentes pour revêtements thermostables de type céramique telles que décrites précédemment, de préférence de marque homogène.

La calotte 2 ainsi revêtue d'émail 3 et pourvue du décor 31 hyperréaliste est ensuite soumise à un traitement thermique de cuisson à une température de 560°C pendant 15 minutes, à l'issue duquel on obtient un revêtement en émail avec une reproduction très fidèle du décor choisi sur toute la partie plane de l'article (fond), ce décor se floutant sur la jupe.

La totalité du revêtement 3 ainsi formé garde toutes les caractéristiques d'un revêtement émaillé une : brillance, dureté, résistance aux chocs, résistance à la flamme, résistance à la corrosion des détergents utilisés dans les lave-vaisselles.

La configuration du revêtement 3 ainsi obtenu correspond à celle de la figure 5 (mais avec un remplacement de la sous-couche par la couche de finition).

### EXEMPLE 4

**Article culinaire en aluminium avec un revêtement extérieur en PTFE sur lequel est imprimé un décor hyperréaliste en tons continus.**

Un disque d'aluminium est préalablement traité de façon chimique ou mécanique de façon à apporter une rugosité de surface permettant une bonne adhérence.

On applique par sérigraphie la pâte sérigraphique blanche PS1 sur la totalité d'une des faces pour obtenir une couche de revêtement PTFE blanche non cuite 3. Cette couche de revêtement peut éventuellement être séchée quelques minutes ou peut être utilisée sans étape de séchage. Dans l'éventualité d'un séchage, un dispositif de refroidissement permet de présenter le disque sous la tête d'impression à une température inférieure à 40°C pour éviter le séchage de l'encre sur les buses.

On imprime par jet d'encre, à l'aide du dispositif illustré sur la figure 8, un décor 31 hyperréaliste sur la face 24 du disque d'aluminium recouvert de la couche blanche 3. L'imprimante de marque KERAJET® permet de reproduire le décor de manière hyperréaliste par quadrichromie à partir des 4 encres aqueuses pigmentées telles que décrites précédemment.

Le disque ainsi revêtu de la formulation à base de PTFE 3 et pourvu du décor 31 hyperréaliste est ensuite soumis à un traitement thermique de cuisson à une température de 420°C pendant 10 minutes, à l'issue duquel on obtient un revêtement en PTFE avec une reproduction très fidèle du décor choisi. Le disque est ensuite embouti par presse de façon à obtenir une calotte 2 en forme de poêle (fond plat avec jupe tel qu'illustré sur les figures 1 et 2) .

Le décor 31 ainsi traité possède une excellente adhésion sur la sous-couche blanche 3.

La totalité du revêtement 3 ainsi formé garde toutes les caractéristiques d'un revêtement PTFE uni : anti-adhérence, résistance chimique, résistance à la flamme, résistance à la corrosion des détergents utilisés dans les lave-vaisselles.

La configuration du revêtement 3 ainsi obtenu correspond à celle de la figure 5.

### EXEMPLE 5

**Article culinaire en aluminium avec un revêtement extérieur en PTFE sur lequel est imprimé un décor hyperréaliste en tons continus.**

Un disque d'aluminium est préalablement traité de façon chimique ou mécanique de façon à apporter une rugosité de surface permettant une bonne adhérence.

On applique par sérigraphie la pâte sérigraphique blanche PS1 sur la totalité d'une des faces pour obtenir une couche de revêtement PTFE blanche non cuite 3. Une étape de séchage entre 70° et 120°C permet d'obtenir la sous-couche 3. Un dispositif de refroidissement permet de présenter le disque sous la tête d'impression à une température inférieure à 40°C pour éviter le séchage de l'encre sur les buses.

On imprime par jet d'encre, à l'aide du dispositif illustré sur la figure 8, un décor 31 hyperréaliste sur la face 24 du disque d'aluminium recouvert de la couche blanche 3. L'imprimante de marque KERAJET® permet de reproduire le décor de manière hyperréaliste par quadrichromie à partir des 4 encres aqueuses pigmentées telles que décrites précédemment.

On applique ensuite par sérigraphie la pâte sérigraphique incolore PS2 de façon à recouvrir intégralement la sous-couche 3 décorée.

Le disque ainsi revêtu de la formulation à base de PTFE 3 et pourvue du décor 31 hyperréaliste est ensuite soumis à un traitement thermique de cuisson à une température de 420°C pendant 10 minutes, à l'issue duquel on obtient un revêtement en PTFE avec une reproduction très fidèle du décor choisi. Le disque est ensuite embouti par presse de façon à obtenir une calotte 2 en forme de poêle (fond plat avec jupe tel qu'illustré sur les figures 1 et 2) .

La totalité du revêtement 3 ainsi formé garde toutes les caractéristiques d'un revêtement PTFE uni : anti-adhérence, résistance chimique, résistance à la flamme, résistance à la corrosion des détergents utilisés dans les lave-vaisselles.

La configuration du revêtement 3 ainsi obtenu correspond à celle de la figure 6.

### EXEMPLE 6

**Article culinaire en verre avec un revêtement extérieur en sol-gel sur lequel est imprimé un décor hyperréaliste au niveau du fond.**

On part d'une calotte circulaire en verre 2 ayant la forme d'un plat à four, que l'on dégraisse par voie alcaline.

On applique sur la face extérieure du substrat la composition sol-gel SG1. Puis, on sèche à 100°C en veillant à conserver un film non entièrement réticulé.

Puis, on imprime par jet d'encre, à l'aide du dispositif illustré sur la figure 8, un décor 31 hyperréaliste sur le fond 24 de la calotte 2 recouverte de la composition sol-gel séchée 3. L'imprimante de marque KERAJET® permet de reproduire le décor de manière hyperréaliste par hexachromie à partir de six encres de couleurs différentes pour revêtements thermostables de type céramique telles que décrites précédemment, de préférence de marque homogène.

La calotte 2 ainsi revêtue du revêtement sol-gel 3 et pourvue du décor 31 hyperréaliste est ensuite soumise à un traitement thermique de cuisson à une température de 450°C pendant 120 minutes, à l'issue duquel on obtient un revêtement avec une reproduction très fidèle du décor choisi sur toute la partie plane de l'article (fond), ce décor se floutant sur la jupe).

La totalité du revêtement 3 ainsi formé garde toutes les caractéristiques d'un revêtement sol-gel uni : brillance, dureté, résistance aux chocs, résistance à la flamme, résistance à la corrosion des détergents utilisés dans les lave-vaisselles.

La configuration du revêtement 3 ainsi obtenu correspond à celle de la figure 5.

### EXEMPLE 7

**Article culinaire en verre avec un revêtement extérieur en sol-gel sur lequel est imprimé un décor hyperréaliste au niveau du fond.**

On part d'une calotte circulaire en verre 2 ayant la forme d'un plat à four, que l'on dégraisse par voie alcaline.

On applique sur la face extérieure la composition SG1.

Après application de la composition SG1, on sèche à 100°C en veillant à conserver un film non entièrement réticulé. Un dispositif de refroidissement permet de présenter la calotte de verre sous la tête d'impression à une température inférieure à 40°C pour éviter le séchage de l'encre sur les buses.

Puis, on imprime par jet d'encre, à l'aide du dispositif illustré sur la figure 8, un décor 31 hyperréaliste sur le fond 24 de la calotte 2 recouverte de la composition sol-gel séchée 3. L'imprimante de marque KERAJET® permet de reproduire le décor de manière hyperréaliste par hexachromie à partir de 4 encres aqueuses pigmentées choisies parmi les encres décrites précédemment. La calotte 2 ainsi revêtue du revêtement sol-gel 3 et pourvue du décor 31 hyperréaliste est ensuite soumise à un traitement thermique de cuisson à une température de 300°C pendant 15 minutes, à l'issue duquel on obtient un revêtement avec une reproduction très fidèle du décor choisi sur toute la partie plane de l'article (fond), ce décor se floutant sur la jupe.

La totalité du revêtement 3 ainsi formé garde toutes les caractéristiques d'un revêtement sol-gel uni : brillance, dureté, résistance aux chocs, résistance à la flamme, résistance à la corrosion des détergents utilisés dans les lave-vaisselles.

La configuration du revêtement 3 ainsi obtenu correspond à celle de la figure 5.

### EXEMPLE COMPARATIF 8

**Article culinaire en aluminium avec un revêtement extérieur en émail sur lequel est imprimé un décor hyperréaliste au niveau du fond.**

A partir d'un disque en aluminium, une presse permet d'obtenir une calotte 2 en forme de poêle (fond plat avec jupe tel qu'illustré sur les figures 1 et 2).

Cette calotte 2 est préalablement dégraissée en voie alcaline.

On applique sur la face extérieure par pulvérisation une barbotine B1. On étuve ce revêtement émail pendant 15 minutes à 560°C pour obtenir un revêtement émail.

Apres refroidissement, on applique une sous couche organique acrylique de composition analogue à celle de la demande coréenne KR2007/0117247 et on réalise le décor au moyen d'une encre réactive que l'on protège par une couche de finition.

Après une cuisson à 250°C, on obtient un décor hyperréaliste qui n'a aucune adhérence sur l'émail.

Apres trois passages en lave-vaisselle, le décor a entièrement disparu.

### EXEMPLE COMPARATIF 9

**Article culinaire en aluminium avec un revêtement extérieur en émail sur lequel est imprimé un décor hyperréaliste au niveau du fond.**

A partir d'un disque en aluminium, une presse permet d'obtenir une calotte 2 en forme de poêle (fond plat avec jupe tel qu'illustré sur les figures 1 et 2).

Cette calotte 2 est préalablement dégraissée en voie alcaline, puis satinée pour donner une surface de coloration blanche homogène.

On applique sur la face extérieure par pulvérisation une sous couche organique acrylique telle que décrite dans le brevet coréen KR 2007/0117247 et on réalise le décor au moyen de l'encre réactive que l'on protège par une barbotine B2. On étuve ce revêtement émail pendant 15 minutes à 560°C pour obtenir un revêtement émail. Apres refroidissement on constate que le décor a entièrement disparu par combustion et que l'émail présente une teinte brune inesthétique.

### EXEMPLE COMPARATIF 10

**Article culinaire en aluminium avec un revêtement extérieur en PTFE sur lequel est imprimé un décor hyperréaliste au niveau du fond.**

Un disque d'aluminium est préalablement traité de façon chimique ou mécanique de façon à apporter une rugosité de surface permettant une bonne adhérence.

On applique par sérigraphie la pâte sérigraphique blanche PS1 sur la totalité d'une des faces pour obtenir une couche de revêtement PTFE blanche non cuite 3. Une étape de séchage à 200°C permet d'obtenir la sous-couche 3.

On dépose sur cette sous-couche une couche organique transparente réceptrice de l'encre telle que décrite dans le brevet coréen KR 2007/0117247, faisant intervenir un diluant et un durcisseur de nature organique pour permettre une bonne adhésion de l'encre projetée.

Après l'impression par jet d'encre des motifs sur la couche réceptrice, une couche de revêtement de protection PS2 est appliquée sur les motifs imprimés.

Le disque est ensuite soumis à une cuisson à une température inférieure à 300°C puis embouti de façon à obtenir une calotte 2 en forme de poêle (fond plat avec jupe tel qu'illustré sur les figures 1 et 2).

On obtient alors un article culinaire dont le revêtement PTFE n'a pas les caractéristiques d'un revêtement PTFE uni : mauvaise cohésion du film, pas d'anti-adhérence ni de résistance chimique. La température de cuisson inférieure à 300°C n'est pas suffisante pour permettre un bon frittage des particules de PTFE.

### EXEMPLE COMPARATIF 11

**Article culinaire en aluminium avec un revêtement extérieur en PTFE sur lequel est imprimé un décor hyperréaliste au niveau du fond.**

Un disque d'aluminium est préalablement traité de façon chimique ou mécanique de façon à apporter une rugosité de surface permettant une bonne adhérence.

On applique par sérigraphie la pâte sérigraphique blanche PS1 sur la totalité d'une des faces pour obtenir une couche de revêtement PTFE blanche non cuite 3. Une étape de séchage à 200°C permet d'obtenir la sous-couche 3.

On dépose sur cette sous-couche une couche organique transparente réceptrice de l'encre telle que décrite dans le brevet coréen KR 2007/0117247, faisant intervenir un diluant et un durcisseur de nature organique pour permettre une bonne adhésion de l'encre projetée.

Après l'impression par jet d'encre des motifs sur la couche réceptrice, une couche de revêtement de protection PS2 est appliquée sur les motifs imprimés.

Le disque est ensuite soumis à une cuisson à une température de 420°C pendant 10 minutes puis embouti de façon à obtenir une calotte 2 en forme de poêle (fond plat avec jupe tel qu'illustré sur les figures 1 et 2).

Apres refroidissement on constate que le revêtement PTFE présente une teinte brune inesthétique : la couche organique réceptrice s'est entièrement dégradée par combustion et les composés de dégradation masquent le décor.

## Revendications

1. Article (1) chauffant comprenant un substrat (2) en aluminium, en alliage d'aluminium ou en fonte d'aluminium présentant deux faces opposées (21, 22), dont l'une (21) au moins est opaque, et un revêtement thermostable (3) disposé sur ladite face (21) opaque,
**caractérisé en ce que** ledit revêtement (3) thermostable comprend :
- un décor (31) au moins bichrome en tons continus se présentant sous forme d'une couche continue ou discontinue,
- une sous-couche opaque (4) en émail recouvrant l'une des faces (21) dudit substrat (2), et/ou
- une couche de finition (32) en émail continue et transparente disposée sur le décor (31) ou disposée entre le substrat (2) ou la sous-couche (4) le cas échéant et le décor (31), et
**en ce que** ledit article (1) a été soumis à une cuisson à une température supérieure à 300 °C.

2. Article (1) chauffant selon la revendication 1, **caractérisé en ce que** le décor (31) est exempt de liant.

3. Article (1) chauffant selon la revendication 1, **caractérisé en ce que** le décor (31) comprend au moins un liant thermostable compatible avec le substrat et/ou, le cas échéant, avec la sous-couche (4) et/ou la couche de finition (32).

4. Article (1) chauffant selon la revendication 3, **caractérisé en ce que** le liant thermostable du décor (31) est choisi parmi les émaux et les polymères inorganiques ou hybrides organiques-inorganiques synthétisés par voie sol-gel.

5. Article (1) chauffant selon l'une quelconque des revendications 1 à 4, **caractérisé en ce que** le décor (31) comprend au moins deux composés colorants différents choisis parmi les pigments thermostables, les sels métalliques, les pigments semi-conducteurs thermochromes et leurs mélanges.

6. Article (1) chauffant selon l'une quelconque des revendications 1 à 5, **caractérisé en ce que** le décor (31) est au moins quadrichrome, et de préférence hexachrome.

7. Article (1) chauffant selon l'une quelconque des revendications 1 à 6, **caractérisé en ce qu'**il constitue un article culinaire (1) dont une des faces opposées est une face intérieure (21) destinée à être disposée du côté d'aliments susceptibles d'être introduits dans ledit article (1), et une seconde desdites faces opposées est une face extérieure (22) destinée à être disposée vers une source de chaleur.

8. Article (1) chauffant selon la revendication 7, **caractérisé en ce que** le décor (31) se présente sous forme d'une couche continue ou discontinue disposée sur la face extérieure (22) de l'article (1).

9. Procédé de fabrication d'un article (1) chauffant comprenant les étapes suivantes :
a) fourniture d'un substrat (2) comprenant deux faces opposées (21, 22), dont l'une (21) au moins est opaque ; puis
b) réalisation d'un revêtement (3) thermostable sur ladite face opaque (21), qui comprend les étapes suivantes :
- b1) une étape d'application sur ladite face opaque (21) d'une composition de décor (31), pour former une couche de décor (31) humide recouvrant au moins partiellement ladite face opaque (21) ; puis
- b2) un traitement thermique de solidification de ladite couche humide de décor, pour former un décor (31) se présentant sous forme d'une couche continue ou discontinue recouvrant au moins partiellement ladite face (21) opaque ;
ledit procédé étant **caractérisé en ce que** la composition de la couche (31) de décor comprend au moins deux composés colorants différents et est appliquée par impression à jet d'encre, et
**en ce qu'**on recouvre au moins partiellement l'une des faces (21) du substrat d'une sous-couche continue opaque en émail (4) et/ou, préalablement au traitement thermique b2) de solidification, on applique une composition de finition continue et transparente consistant en une barbotine de fritte d'émail sur la couche de décor (31) humide obtenue à l'issue de l'étape b1) ou entre le substrat (2) ou la sous-couche (4) le cas échéant et la couche de décor (31),
le traitement thermique de solidification de la couche humide de décor étant réalisé à une température supérieure à 300°C

10. Procédé selon la revendication 9, **caractérisé en ce que** la composition de décor est exempte de liant.

11. Procédé selon la revendication 10, **caractérisé en ce que** la composition de décor comporte au moins un liant thermostable choisi parmi les émaux et les polymères inorganiques ou hybrides organiques-inorganiques synthétisés par voie sol-gel.

12. Procédé selon l'une quelconque des revendications 9 à 11, **caractérisé en ce que** le décor (31) comprend au moins deux composés colorants différents, qui sont choisis parmi les pigments thermostables, les sels métalliques, les pigments semi-conducteurs thermochromes et leurs mélanges.

13. Procédé selon la revendication 12, **caractérisé en ce que** le décor (31) est au moins quadrichrome, et de préférence hexachrome.

## Patentansprüche

1. Erhitzbarer Gegenstand (1), ein Substrat (2) aus Aluminium, aus einer Aluminiumlegierung oder aus Aluminiumguss umfassend, das zwei gegenüberliegende Seiten (21, 22) aufweist, von denen zumindest eine (21) opak ist, und eine thermostabile Beschichtung (3), die auf der besagten opaken Seite (21) aufgebracht ist,
**dadurch gekennzeichnet, dass** die besagte thermostabile Beschichtung (3) folgendes umfasst:
- ein zumindest zweifarbiges Dekor (31) in kontinuierlichen Tönen, das sich in Form einer kontinuierlichen oder diskontinuierlichen Schicht darstellt,
- eine opake Unterschicht (4) aus Email, die eine der Seiten (21) des besagten Substrats (2) überzieht, und/ oder
- eine kontinuierliche und transparente Deckschicht (32) aus Email, die auf dem Dekor (31) aufgebracht ist, oder zwischen dem Substrat (2) oder gegebenenfalls der Unterschicht (4) und dem Dekor (31) angeordnet ist, und
dadurch, dass der besagte Gegenstand (1) bei einer Temperatur von mehr als 300°C gebrannt wird.

2. Erhitzbarer Gegenstand (1) nach Anspruch 1, **dadurch gekennzeichnet, dass** das Dekor (31) frei von Bindemitteln ist.

3. Erhitzbarer Gegenstand (1) nach Anspruch 1, **dadurch gekennzeichnet, dass** das Dekor (31) zumindest ein thermostabiles Bindemittel umfasst, das mit dem Substrat und/ oder gegebenenfalls mit der Unterschicht (4) und/ oder der Deckschicht (32) kompatibel ist.

4. Erhitzbarer Gegenstand (1) nach Anspruch 3, **dadurch gekennzeichnet, dass** das thermostabile Bindemittel des Dekors (31) aus den Emailen und den anorganischen oder organischen-anorganischen Hybridpolymeren, die nach dem Sol-Gel-Verfahren synthetisiert wurden, ausgewählt wird.

5. Erhitzbarer Gegenstand (1) nach irgendeinem der Ansprüche 1 bis 4, **dadurch gekennzeichnet, dass** das Dekor (31) zumindest zwei unterschiedliche Farbstoffverbindungen umfasst, die aus den thermostabilen Pigmenten, Metallsalzen, thermochromen Halbleiterpigmenten und deren Mischungen ausgewählt werden.

6. Erhitzbarer Gegenstand (1) nach irgendeinem der Ansprüche 1 bis 5, **dadurch gekennzeichnet, dass** das Dekor (31) zumindest vierfarbig, und vorzugsweise sechsfarbig ist.

7. Erhitzbarer Gegenstand (1) nach irgendeinem der Ansprüche 1 bis 6, **dadurch gekennzeichnet, dass** er ein Küchengegenstand (1) ist, von dem eine der gegenüberliegenden Seiten eine Innenseite (21) ist, die dazu bestimmt ist, auf Seiten von Nahrungsmitteln angeordnet zu werden, die in den besagten Gegenstand (1) eingebracht werden können, und eine zweite der besagten gegenüberliegenden Seiten eine Außenseite (22) ist, die dazu bestimmt ist, auf eine Wärmequelle gerichtet zu werden.

8. Erhitzbarer Gegenstand (1) nach Anspruch 7, **dadurch gekennzeichnet, dass** sich das Dekor (31) in Form einer kontinuierlichen oder diskontinuierlichen Schicht darstellt, die auf der Außenseite (22) des Gegenstandes (1) angeordnet ist.

9. Verfahren zur Herstellung eines erhitzbaren Gegenstandes (1), die folgenden Schritte umfassend:
a) Bereitstellung eines Substrats (2), zwei gegenüberliegende Seiten (21, 22) umfassend, von denen zumindest eine (21) opak ist; danach
b) Erstellung einer thermostabilen Beschichtung (3) auf der besagten opaken Seite (21), die die folgenden Schritte umfasst:
- b1) einen Schritt zum Auftragen einer Dekorzusammensetzung (31) auf der besagten opaken Seite (21), um eine feuchte Dekorschicht (31) zu bilden, die die besagte opake Seite (21) zumindest teilweise abdeckt; danach
- b2) eine thermische Behandlung zum Verfestigen der besagten feuchten Dekorschicht, um ein Dekor (31) zu bilden, das sich in Form eine kontinuierlichen oder diskontinuierlichen Schicht darstellt, die die besagte opake Seite (21) zumindest teilweise abdeckt;
wobei das besagte Verfahren **dadurch gekennzeichnet ist, dass** die Zusammensetzung der Dekorschicht (31) zumindest zwei unterschiedliche Farbstoffverbindungen umfasst, und mittels Tintenstrahldruck aufgetragen wird, und
dadurch, dass man eine der Seiten (21) des Substrats zumindest teilweise mit einer kontinuierlichen opaken Unterschicht aus Email (4) überzieht, und/ oder man vor der thermischen Behandlung b2) zum Verfestigen eine kontinuierliche und transparente Deckschichtzusammensetzung, die aus einem Emailfritte-Schlicker besteht, auf der feuchten Dekorschicht (31) aufbringt, die man nach dem Schritt b1) erhält und/ oder zwischen dem Substrat (2), oder gegebenenfalls der Unterschicht (4) und der Dekorschicht (31), und
die thermische Behandlung zum Verfestigen der feuchten Dekorschicht wird bei einer Temperatur von mehr als 300°C durchgeführt.

10. Verfahren nach Anspruch 9, **dadurch gekennzeichnet, dass** die Dekorzusammensetzung frei von Bindemitteln ist.

11. Verfahren nach Anspruch 10, **dadurch gekennzeichnet, dass** die Dekorzusammensetzung zumindest ein thermostabiles Bindemittel umfasst, das aus aus den Emailen und den anorganischen oder organischen-anorganischen Hybridpolymeren, die nach dem Sol-Gel-Verfahren synthetisiert wurden, ausgewählt wird.

12. Verfahren nach irgendeinem der Ansprüche 9 bis 11, **dadurch gekennzeichnet, dass** das Dekor (31) zumindest zwei unterschiedliche Farbstoffverbindungen umfasst, die aus den thermostabilen Pigmenten, Metallsalzen, thermochromen Halbleiterpigmenten und deren Mischungen ausgewählt werden.

13. Verfahren nach Anspruch 12, **dadurch gekennzeichnet, dass** das Dekor (31) zumindest vierfarbig, und vozugsweise sechsfarbig ist.

## Claims

1. Heating article (1) comprising a substrate (2) made of aluminium, of aluminium alloy or of cast aluminium having two opposite surfaces (21, 22), at least one (21) of which is opaque, and a heat-stable coating (3) arranged on said opaque surface (21),
**characterised in that** said heat-stable coating (3) comprises:
- an at least two-colour decoration (31) having continuous tones and being provided in the form of a continuous or discontinuous layer,
- an opaque sub-layer (4) made of enamel covering one of the surfaces (21) of said substrate (2) and/or a continuous and transparent finishing layer (32) made of enamel arranged on the decoration (31) or arranged between the substrate (2) or the sub-layer (4) where applicable and the decoration (31), and
**in that** said article (1) has been cured at a temperature of more than 300 °C.

2. Heating article (1) according to claim 1, **characterised in that** the decoration (31) is binderless.

3. Heating article (1) according to claim 1, **characterised in that** the decoration (31) comprises at least one heat-stable binder compatible with the substrate and/or, where applicable with the sub-layer (4) and/or the fishing layer (32).

4. Heating article (1) according to claim 3, **characterised in that** the heat-stable binder of the decoration (31) is chosen from among enamels and inorganic or hybrid organic-inorganic polymers synthesised by the sol-gel process.

5. Heating article (1) according to any of claims 1 to 4, **characterised in that** the decoration (31) comprises at least two different dye compounds chosen from among heat-stable pigments, metal salts, thermochromic semiconductor pigments and mixtures thereof.

6. Heating article (1) according to any of claims 1 to 5, **characterised in that** the decoration (31) is at least quadrichrome, and preferably hexachrome.

7. Heating article (1) according to any of claims 1 to 6, **characterised in that** it constitutes a culinary article (1) of which one of the opposite surfaces is an inner surface (21) intended to be arranged on the side of the food able to be introduced into said article (1), and a second of said opposite surfaces is an outer surface (22) intended to be arranged towards a source of heat.

8. Heating article (1) according to claim 7, **characterised in that** the decoration (31) is provided in the form of a continuous or discontinuous layer arranged on the outer surface (22) of the article (1).

9. Method for manufacturing a heating article (1) comprising the following steps:
a) supplying of a substrate (2) comprising two opposite surfaces (21, 22), at least one (21) of which is opaque; then
b) carrying out of a heat-stable coating (3) on said opaque surface (21), that comprises the following steps:
- b1) a step of applying on said opaque surface (21) of a decoration composition (31), in order to form a wet decoration layer (31) covering at least partially said opaque surface (21); then
- b2) a heat treatment for solidifying said wet decorative layer, in order to form a decoration (31) provided in the form of a continuous or discontinuous layer covering at least partially said opaque surface (21) ;
said method being **characterised in that** the composition of the decorative layer (31) comprises at least two different dye compounds and is applied via inkjet printing, and
**in that** one of the surfaces (21) of the substrate is at least partially covered with an opaque continuous sub-layer (4) made of enamel and/or, prior to the heat treatment b2) for solidification, a continuous and transparent finishing composition is applied consisting of an enamel frit slip on the decorative layer (31) obtained after the step b1) or between the substrate (2) or the sub-layer (4) where applicable and the decorative layer (31),
the heat treatment for solidification of the wet decorative layer being carried out at a temperature of more than 300 °C.

10. Method according to claim 9, **characterised in that** the decorative composition is binderless.

11. Method according to claim 10, **characterised in that** the decorative composition comprises at least one heat-stable binder chosen from among enamels and inorganic or hybrid organic-inorganic polymers synthesised by the sol-gel process.

12. Method according to any of claims 9 to 11, **characterised in that** the decoration (31) comprises at least two different dye compounds which are chosen from among heat-stable pigments, metal salts, thermochromic semiconductor pigments and mixtures thereof.

13. Method according to claim 12, **characterised in that** the decoration (31) is at least quadrichrome, and preferably hexachrome.
